# EUROPEAN PATENT SPECIFICATION

(11) **EP 4 426 168 B1**
(45) Date of publication and mention of the grant of the patent: **25.12.2024**
(21) Application number: 23721858.1
(22) Date of filing: 21.04.2023
(51) Int. Cl.: A47J 37/06, A47J 37/07

(54) **SMOKELESS BARBECUE SYSTEM**
RAUCHLOSES GRILLSYSTEM
SYSTÈME DE BARBECUE SANS FUMÉE

(30) Priority: 23.04.2022 EP 22169604; 25.11.2022 EP 22209695
(43) Date of publication of application: 11.09.2024
(73) Proprietor: Dam, Xuan Linh, 80997 München (DE)
(72) Inventor: Dam, Xuan Linh, 80997 München (DE)
(74) Representative: Reitstötter Kinzebach
(86) International application number: PCT/EP2023/060501
(87) International publication number: WO 2023/203222

(56) References cited:
- EP-A1- 1 444 937
- WO-A1-2004/047600
- KR-B1- 101 484 131
- KR-Y1- 200 185 517
- US-A1- 2010 050 882

## Description

The present invention concerns a cooking appliance which is primarily employed as a Smokeless Barbecue System.

### BACKGROUND OF THE INVENTION

### FIELD OF THE INVENTION

The present invention relates to the primary use of cooking grills. It is particularly concerned with avoiding smokes during the barbecue process, maximum flexibility in applying different types of energy sources, and diversified mobility of the cooking appliance. Secondary uses of this invention are hot pot cooking or pan-frying.

### RELATED ART

Cooking grills of various types currently available in the market are either smoking or not optimized for indoor use. Depending on the types of energy sources utilized, exhaust gases, such as carbon monoxide (CO), cause huge technical, financial, and governmental hurdles for users to obtain the permission to use those cooking grills indoors. Those hurdles are even more serious if the grills generate smokes. Furthermore, existing cooking grills are restricted either to indoor or outdoor use only. EP 1 444 937 A1 shows a grill with a cooling system for the grill grid known in the art.

### BRIEF DESCRIPTION OF THE INVENTION

### SUMMARY OF THE INVENTION

The object of the present invention provides a cooking appliance, especially a barbecue grill, which overcomes the problems and disadvantages of prior art grills described above.

The cooking appliance of the present invention is defined in independent claim 1. Preferred embodiments are claimed in the dependent claims.

Accordingly, the present invention concerns a cooking appliance comprising a casing having an upper opening;
a grill grid arranged in said upper opening of said casing;
a heating assembly comprising at least one heating element arranged within said casing, said heating element being connectable to an energy source; and
a cooling system comprising a source of cooling fluid for cooling said grill grid, wherein said grill grid comprises a hollow tube assembly connectable to said cooling system, said hollow tube assembly comprising essentially parallel hollow tubes extending between a bottom water tank (25,51) arranged on one side said grill grid and a top water tank
arranged on an opposite side of said grill grid, said essentially parallel hollow tubes being configured as first tubes which rise from said bottom water tank to said top water tank, and at least two second tubes extend horizontally between said bottom water tank and said top water tank.

In certain embodiments, the cooling system is an external cooling system connected to said grill grid. In other embodiments, said cooling system is an integral part of said grill grid.

In certain embodiments said heating assembly comprises two heating elements arranged laterally beneath said grill grid.

In certain embodiments said heating elements comprise electric heaters connectable to a re-chargeable battery housed within said casing and/or to an external power grid.

In this case said electric heaters can comprise fiber carbon heaters.

In certain embodiments said heating elements comprise gas heaters connectable to a gas supply, said gas supply being selected from a built-in gas cartridge removable housed within said casing, an external gas tank or to fixedly installed gas line. According to the invention, said grill grid comprises a hollow tube assembly connectable to a cooling system comprising a source of cooling fluid.

According to the invention, said hollow tube assembly comprises essentially parallel hollow tubes extending between said bottom water tank arranged on one side said grill grid and said top water tank arranged on an opposite side of said grill grid. The water tanks can be an integral part of the grill grid thus defining an internal cooling system.

Particularly, said hollow tube assembly can comprise a meandering hollow tube. Said source of cooling fluid can comprise a water battery or water storage arranged in a cooling circuit. In this case said cooling circuit can comprise a radiator.

In certain embodiments, said water battery or water storage is pressurizable.

In certain embodiments said cooling circuit can comprise a feed pump selected from electric pumps or hydraulic pumps, especially hydraulic RAM-pumps or hydraulic pumps operated by pressurized air.

Said essentially parallel hollow tubes are configured as first tubes which rise from said bottom water tank to said top water tank, and at least two second tubes extend horizontally between said bottom water tank and said top water tank.

Preferably, said first tubes have a smaller inner diameter than said second tubes.

In certain embodiments said first tubes can comprise grease stoppers at their outer circumference.

In certain embodiments, a grease stopper can alternatively or additionally be arranged at a bottom edge of said bottom water tank.

In certain embodiments said bottom and top tanks comprise steam outlets.

Said steam outlets can comprise steam tubes, said steam tubes being connected to downwardly extending steam ductings.

The cooking appliance of the present invention can further comprising a water tray arranged beneath said grill grid within said casing.

In certain embodiments of the cooking appliance of the present invention, said grill grid is removable.

The present invention also concerns a set according to claim 15.

This invention of cooking appliance is primarily employed as a smokeless barbecue system. The smokeless barbecue system consists of three major modules:
- Two grill burners each placed sidewise below the grill grid providing heat for cooking;
- Grill grid supporting the barbecue food, whereas the barbecue food area of the grill grid does not overlap with the grill burners
- A passive or, according to an alternative that does not fall under the scope of the claims, an active cooling system to cool down the grill grid and thus to prevent barbecue food from burning and from smoking. Passive cooling is achieved by omitting the active cooling system, and by using a grill grid with self-sufficient passive cooling capability.

Grill burner, grill grid, and active cooling system can be configured in many ways, allowing maximum freedom of mobility and of utilization of energy sources. The configurations provided in this document only describe the preferred ones, whereas other configurations can be composed based on the general nature of the components outlined within the present document.

Instead of using the grill grid, a hot pot holder or a pan can be put in place of the grill grid to convert the smokeless barbecue system into either a hot pot cooking system or a pan-frying system. These two additional applications are of secondary nature of this smokeless barbecue system.

This smokeless barbecue system is designed such that it can be put on a table or be integrated into a table-top.

The present invention achieves the following objectives:

### Real smokeless and healthy barbecue experience:

Conventional barbecue grills produce smokes from burning food, containing polycyclic aromatic hydrocarbons (PAH), which is carcinogenic in nature. This invention features a real smoke-free capability, regardless of the configurations of the major modules. Moreover, this smokeless and gentle way of barbecue does not disproportionately dehydrate the food and preserves its nutrients.

### Application of various forms of energy:

The present invention employs both fossil energy carriers and energy carriers converted from renewable energy. Furthermore, electrical energy can be used as heat source.

In addition to charcoal, natural gas (NG), liquefied petroleum gas (LPG), and gas from cartridges, being the current common sources of fossil energy, this invention also consider hydrogen (green/blue) being the future energy carrier converted from renewable energy. Gas cartridges can be filled with butane & propane or hydrogen. These fossil energy carriers and hydrogen produce carbon monoxide (CO), whereas the utilization of electrical energy is free of CO, making it the preferred energy option for indoor application of the smokeless barbecue system.

### Flexible mobility:

This invention allows barbecue grill to be used outdoors or indoors, and depending on the configurations applied, the barbecue grill can versatilely be used both outdoors and indoors. However, to achieve maximum indoor and outdoor mobility, the most preferred configurations of the smokeless barbecue system are:
- Passive cooling of grill grid combined with gas cartridge or gas cylinder.
- According to an alternative that does not fall under the scope of the claims, active cooling of grill grid with air compressor combined with gas cartridge or gas cylinder.
- According to an alternative that does not fall under the scope of the claims, active cooling of grill grid with hydraulic ram pump combined with gas cartridge or gas cylinder.
- Self-sufficient cooling of grill grid without requiring external power sources by using a self-circulating water-cooled grill grid combined with gas cartridge or gas cylinder.

Use smokeless barbecue system appropriate for indoors allows year-round barbecue experiences:
Barbecue normally is constrained to good weather conditions outdoors. This is especially true for regions with four seasons climate or in colder area of the globe. Thus, the barbecue season is normally limited to certain months of the year. Particular configurations of the smokeless barbecue system enable barbecue even during raining, cold or snowing seasons indoors. For configurations featuring both outdoor and indoor capabilities, the smokeless barbecue system can be employed outdoors during good weather season, and indoors during cold or snowing weather period of the year. This would make a perfect Christmas barbecue event with family and friends.

Reduce total costs of safety infrastructure, and ease of obtaining permission to operate indoors, especially for indoor gastronomic facilities:
For employment of a single grill indoors, governmental safety requirements, costs for installation, and the total cost of ownership are easily manageable. However, if dozens of grills are utilized indoors of a gastronomic facility, the efforts and costs for technical safety infrastructure become greatly challenging for any business owner - even if smokeless grills are utilized. As soon as fossil energy, and toxic emission gases, such as carbon monoxide (CO) are involved in the barbecue process, very strict safety regulations must be complied to obtain operation permission from local government. Employment of conventional, smoked grills becomes even too expensive for business owner to provide indoor barbecue to their customers. In certain buildings, such as shopping malls, or in certain cities, it is even prohibited to utilize fossil energy indoors for barbecue grills.

Owners of gastronomic facilities can easily avoid huge, technical costs for complying these governmental safety requirements with the following preferred configurations of the smokeless barbecue system:
- Passive cooling of grill grid combined with electric grill burner.
- Active cooling of grill grid with air compressor combined with electric grill burner.
- Active cooling of grill grid with hydraulic ram pump combined with electric grill burner.
- Self-sufficient cooling of grill grid without requiring external power sources by using a self-circulating water-cooled grill grid combined with electric burner.

### Sustainable, environmentally friendly barbecue grills:

First, smokeless grill process of the smokeless barbecue system does not contaminate the environment with unhealthy smokes.

Second, eliminating resources for safety infrastructure required to install fossil energy supply, to exhaust smokes and toxic emission gases, as such, already contributes to eco-friendliness. Furthermore, it also means that no energy is required to operate the safety infrastructure, resulting in energy saving and an additional contribution to eco-friendliness.

Use smokeless barbecue system as a hot pot or pan-frying cooking appliance:
Beside indoor barbecue, hot pot cooking has become ubiquitous around the globe. Private households and gastronomic businesses usually invest in two different cooking appliances for both applications.

Instead of using the grill grid, a hot pot holder can be put in place of the grill grid to convert the smokeless barbecue system into a hot pot cooking system.

Likewise, the smokeless barbecue system can easily be transformed into a pan-frying system by using a pan instead of the grill grid.

Users just need to invest in one smokeless barbecue system for three different applications: barbecue, hot pot, and pan-frying.

The invention will now be described in more detail in connection with preferred embodiments depicted in the attached drawings.

In the drawings:
- Fig. 1: shows a perspective view of a smokeless barbecue system which can incorporate a grill grid of the present invention as described in Fig. 21 to 27;
- Fig. 2: shows a section view along line II-II of Fig. 1;
- Fig. 3: shows a variant of the barbecue system of Fig. 1 in a hot pot application;
- Fig. 4: shows a variant of the barbecue system of Fig. 1 in a pan-fry application;
- Fig. 5: shows an example of a passively cooled grill grid that does not fall under the scope of the claims but is useful for understanding the invention;
- Fig. 6: shows a section view of the embodiment of Fig. 5 according to line VI-VI of Fig. 5;
- Fig. 7: shows a water battery for the grill grid of Fig. 5;
- Fig. 8: shows an alternative water battery for the grill grid of Fig. 5;
- Fig. 9: shows an alternative grill grid that does not fall under the scope of the claims but is useful for understanding the invention and with connections to an active cooling system;
- Fig. 10: shows yet another alternative grill grid that does not fall under the scope of the claims but is useful for understanding the invention and with connections to an active cooling system;
- Fig. 11: shows a section view of the grill grid of Fig. 10 according to line XI-XI of Fig. 10;
- Fig. 12: shows a first example of an active cooling system with hydraulic pump and fan for a grill grid that does not fall under the scope of the claims but is useful for understanding the invention;
- Fig. 13: shows another example of an active cooling system with hydraulic pump, without fan and with cooling tub for a water container for a grill grid that does not fall under the scope of the claims but is useful for understanding the invention;
- Fig. 14: shows yet another example of an active cooling system for a grill grid that does not fall under the scope of the claims but is useful for understanding the invention and with hydraulic pump, without fan, with cooling tub for radiator and for water container;
- Fig. 15: shows a further example of an active cooling system for a grill grid that does not fall under the scope of the claims but is useful for understanding the invention and which is operated by air pressure and provided with a fan;
- Fig. 16: shows a similar example as the active cooling system of Fig. 15 but without fan;
- Fig. 17: shows yet another variant of the active cooling system of Fig. 15 with a cooling tub for radiators;
- Fig. 18: shows yet another variant of the active cooling system of Fig. 15 with Air Pressure, with cooling tub for radiators and for water containers;
- Fig, 19: shows yet another variant of the active cooling system of Fig. 15 with air pressure, with cooling tub for water containers, with radiators;
- Fig. 20: shows yet another variant of the active cooling system of Fig. 15 with air pressure, with cooling tub for water containers, without radiators;
- Fig. 21: shows a smokeless barbecue system in accordance with an embodiment of the present invention using a self-circulating gravity grill grid;
- Fig. 22: shows a sectional view of the gravity grill grid according to line XXII-XXII of Fig. 21;
- Fig. 23: shows a similar section view as Fig. 22 but including steam tubes and steam ducting;
- Fig. 24: shows a further embodiment of the present invention using a self-circulating gravity grill grid;
- Fig. 25: shows a side view of the self-circulating gravity grill grid of Fig. 24 having a level indicator window;
- Fig. 26: shows a sectional side view of the self-circulating gravity grill grid of Fig. 24 along line XXVI-XXVI;
- Fig. 27: shows a smokeless barbecue system in accordance with yet another embodiment of the present invention using the self-circulating gravity grill grid of Figures 24 to 26 in a view similar to the embodiment of Fig. 23 showing steam tubes, steam ducting, and a grease stopper edge below the bottom water tank; and
- Fig. 28: shows a perspective view of still another embodiment of a smokeless barbecue system in accordance with the present invention having a refill system for the water tray in a similar view as the embodiment of Fig. 1.

Throughout the drawings, identical or similar elements or elements having similar functionalities are denoted by the same reference signs.

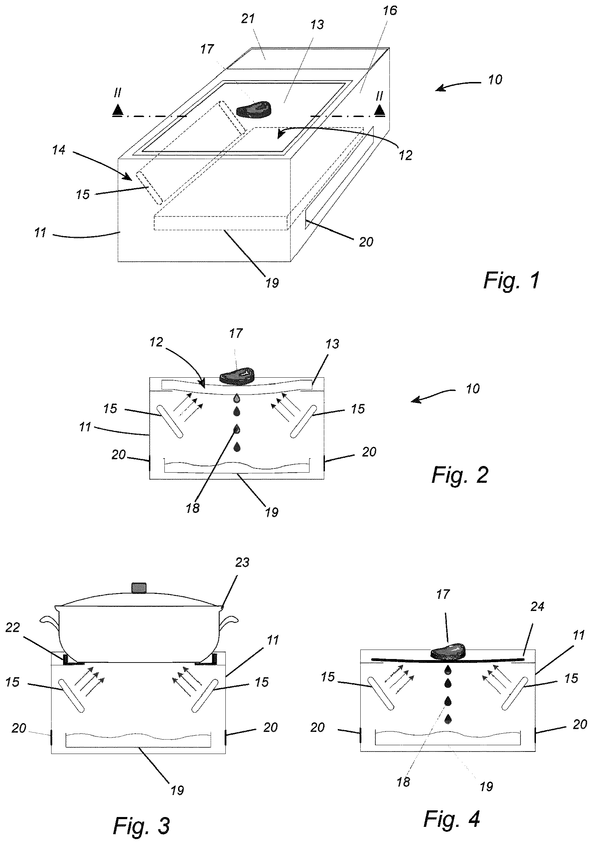

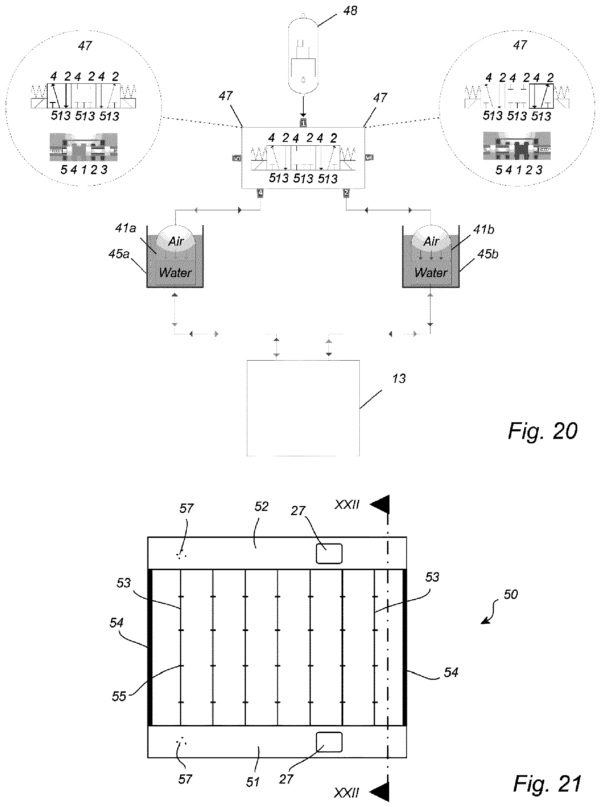

Figures 1 and 2 show a perspective view of a cooking appliance 10 which can function with a grill grid with cooling system according to the embodiments of the invention shown in figures 21-27; The cooking appliance 10 comprises a casing 11 having an upper opening 12; A grill grid 13 arranged in said upper opening 12 of said casing 11; a heating assembly 14 comprising two heating elements 15 arranged within said casing 11, said heating elements being connectable to an energy source not depicted in the drawings. A cooling system 16 is connected to the grill grid 13 for cooling said grill grid13. The perspective drawing in Fig. 1 and the cross section in Fig. 2 illustrate the basic function of the smokeless barbecue system 10. Two grill burners 15 generate heat for the food 17 placed on the grill grid 13 to be barbecued. The passive or, according to an alternative that does not fall under the scope of the claims, an active cooling system 16 circulate water inside the grill grid 13 to cool it down. (different types of active cooling system are described below).

Smokelessness mainly derives from two technical implementations:
First, two grill burners 15 each are placed sidewise below the grill grid 13, whereas the grill area of the grill grid 13 does not overlap the grill burners 15. Food residues/ grease 18 dropping down from the grill grid 13 don't get burnt and smoked by the grill burners 15 but fall into a water tray 19. To direct food residues/ grease 18 to fall more towards the center of the water tray 19, instead of splashing towards the rims of the grill grid 13, the grill grid 13 has symmetric downward slopes from two rims of the grill grid 13, forming a V-shape, as can best be seen in the section view of Fig. 2.

Second, the grill grid 13 is cooled below burning temperature of the food 17 so that no smoke is generated.

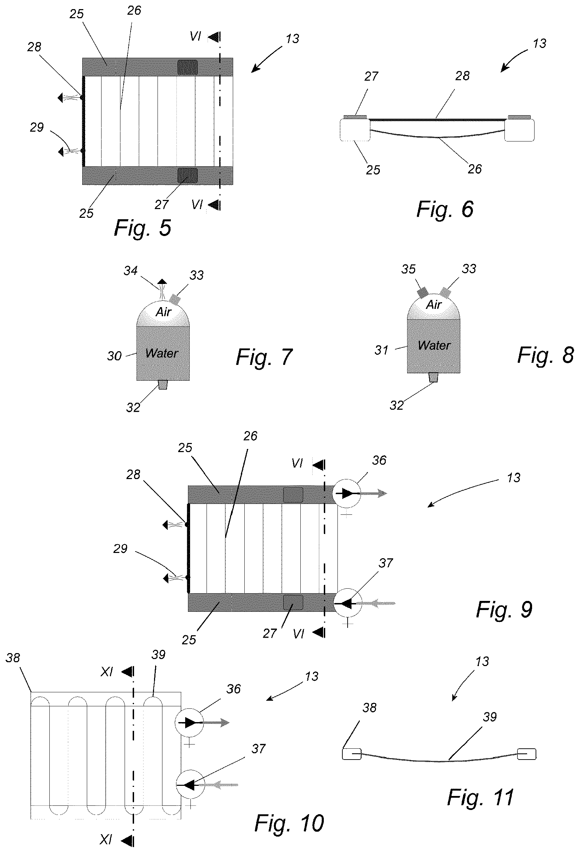

Instead of active cooling, passive cooling of the grill grid 13 can be achieved by using a twin tank grill grid, as illustrated, for example, in Fig. 5 while the active cooling system 16 is not required.

The water tray 19 can be removed from or slid into the cabinet/casing 11 through the openings for water tray 20. The water tray 19 shall be filled ¾ with water, which collects and cools down food residues/ grease 18 falling from the grill grid 13. Setting operational parameters, such as power or cooling intensities can be done in the control board 21 section.

Fig. 3 shows a variant of the barbecue system of Fig. 1 in a hot pot application. For hot pot application, a hot pot holder 22 can be put in place of the grill grid 13 to hold an hot pot 23 thus allowing to convert the smokeless barbecue system into a hot pot cooking system.

Fig. 4 shows a variant of the barbecue system of Fig. 1 in a pan-fry application. Similarly, the smokeless barbecue system can easily be transformed into a pan-frying system by using a pan 24 of Fig. 4 instead of the grill grid 13. The pan 24 has centrically symmetric slopes and holes allowing grease 18 to drop down to water tray 24.

Users just need to invest in one smokeless barbecue system for three different applications: barbecue, hot pot, and pan-frying.

Depending on the form of energy employed, mobility and recommendations for use in gastronomic facilities vary.

Table 1 summarizes the various forms of energy, and their recommended areas of employment in different embodiments of the present invention

**Table 1:**

| **Energy Form** | **Energy Supply** | **Grill Burner (left & right)** | **Mobility - Preferred** | **Carbon Monoxide (CO) Emission** | **Governmental Safety Requirements** | **Recommended for Private Households** | **Recommended for Indoor Gastronomic Facilities** |
|---|---|---|---|---|---|---|---|
| Electricity | - Power plant | Infrared lamp | indoors (outdoors, if electricity available) | no | low | yes | yes |
| | - Powerful battery | | | | | | |
| Natural Gas (NG) | City gas | Infrared ceramic burner | indoors | yes | very high | conditionally | no |
| Liquefied Petroleum Gas (LPG) | - Gas cylinder | Infrared ceramic burner | indoors outdoors | yes | very high | conditionally | no |
| | - Gas tank | | | | | | |
| Butane Propane | Cartridge | Infrared ceramic burner | indoors outdoors | yes | medium to high | yes | yes |
| Hydrogen (green/blue) | - Power plant | Infrared ceramic burner | indoors outdoors | yes | medium to high | yes | yes |
| | - Cartridge | | | | | | |
| Charcoal | - Common charcoal suppliers | Rectangular charcoal basket | outdoors | yes | very high | conditionally | no |

The present invention employs both fossil energy carriers and energy carriers converted from renewable energy. Furthermore, electrical energy can be used as heat source. In addition to charcoal, natural gas (NG), liquefied petroleum gas (LPG), and gas from cartridges, being the current common sources of fossil energy, this invention also consider hydrogen (green/blue) being the future energy carrier converted from renewable energy. Gas cartridges can be filled with butane & propane or hydrogen. These fossil energy carriers and hydrogen produce carbon monoxide (CO), whereas the utilization of electrical energy is free of CO, making it the most preferred energy option for indoor application of the smokeless barbecue system.

In the following, a grill grid 13 using water batteries will be described in connection with Figures 5 to 11.

Preferred grill grid configurations, and their recommended areas of employment are summarized in Table 2 below.

**Table 2**

| **Grill Grid and Water Battery Type** | **Drawing** | **Watter Battery Connectable** | **Connected to Active Cooling System*** | **Passive Cooling** | **Active Cooling** | **Mobility** | **Recommended for Indoor Gastronomic Facilities & Private Households** |
|---|---|---|---|---|---|---|---|
| Twin Tank Grill Grid | Fig. 5, 6, | yes | no | yes | no | - indoors | yes |
| | | | | | | - outdoors | |
| Twin Tank Grill Grid With Ports | Fig. 9, 6 | yes | yes | no | yes | - indoors | yes |
| | | | | | | - outdoors | |
| Meandering Grill Grid Pipe | Fig. 10, 11 | no | yes | no | yes | - indoors | yes |
| | | | | | | - outdoors | |
| Water Battery | Fig. 7 | - | no | yes | no | - indoors | yes |
| | | | | | | - outdoors | |
| Water Battery With Compressed Air | Fig. 8 | - | no | yes | no | - indoors | yes |
| | | | | | | - outdoors | |

Fig. 5 shows a passively cooled grill. Fig. 6 shows a section view of the embodiment of Fig. 5 according to line VI-VI of Fig. 5.

The twin tank grill grid 13 comes in two different preferred types: Fig. 5 outlines the type without ports, and Fig. 9. With ports. Both types can be connected to a water battery as shown, for instance, in Fig. 7, to replenish the twin water tanks 25 with water vaporizing over the course of the barbecue process. Passive and active cooling can be achieved by cooling down a multitude of tubes 26 with water. Passive cooling means that water between the twin water tanks 25 and the tubes 26 are exchanged during the barbecue process. Please note, that no circulation literally occurs between the tubes and the twin water tanks.

Fig. 5 shows the twin tank grill grid for passive cooling. It is self-sufficient in terms of autonomous cooling, as no external forces or equipment are required to cool down the tubes 26 of the grill grid, preventing the barbecue food from being burnt and smoked. The twin water tanks 25 are connected in equidistance by multitude of tubes 26, allowing water being exchanged between the twin water tanks 25 and the tubes 26, resulting in cooling down the water within the tubes 26. The tubes 26 are symmetric, downward sloping tubes to direct grease moving towards the center of the grill grid (V-shape tubes). To prepare the use of the twin tank grill grid 13, the twin water tanks 25 need to be filled with water up to a predefined level. To do so, one of the two caps 27 shall be opened for water inlet. The caps 27 are closed prior to use of the grill grid. During the barbecue process, steams are produced by boiling water inside the tubes 26, which escape into each of the twin water tanks 25. The steams collected in the twin water tanks 25, above water level therein, are discharged through valves or holes 29 distributed evenly on a bigger tube 28 connecting the upper hollow spaces of the twin water tanks 25. The steam discharge has three essential physical effects: first, to ease overpressure within the grill grid; second, to cool down the grill grid; and third, to reduce water volume inside the grill grid. Therefore, after a certain grill time, the water inside the twin tank grill grid is depleted, requiring it to be replaced by another grill grid filled with water, otherwise the depleted grill grid cannot be cooled down resulting in smokes generation.

Alternatively, a water battery 30 or 31, as shown in Figures 7 and 8, respectively, can be docked on just one or both twin water tanks 25 by opening the cap 27 and plugging the connector 32 of the water batteries 30 or 31 on the twin water tanks 25. The connector 32 can be provided with an adjustment screw and the water rate can be adjustable.

Fig. 7 outlines the water battery 30 featuring a cap 33 for water inlet/outlet; a valve/hole 34 to equalize air pressure inside and outside the water battery and a connecter 32 with adjustment screw to tune the water drain rate.

Fig. 8 depicts a water battery with compressed air 31. After filling the water battery 31 up to predefined level with water, and closing the cap 33 again, the air within the water battery 31 can be charged with compressed air by an external air compressor via valve 35. The increased air pressure inside the water battery would allow a higher water drain rate at the connecter 32 if required.

Fig. 9 shows an alternative grill grid with connections to an active cooling system. Fig. 9 illustrates the twin tank grill grid with ports for active cooling. Production deviations of the twin tank grill grid and stochastical heating behavior within the tubes can cause impulsive peaks of steam expansions, which in turn lead to harmless implosions inside the twin tank grill grid. Although the implosions are harmless, they cause noises and trigger higher magnitude of steams discharge, creating psychical fear to some users. To solve this problem, the water inside the tubes 26 must be cooled down faster than the time it needs to be transformed into steams caused by constant heat radiated from the grill burner (reference signs 15 in Figures 1 - 4). The solution is to circulate the water inside the tubes 26 so it does not have enough time to be transformed into steams, and to cool down the water before feeding it back to the tubes 26. Fig. 9 shows such a solution: the ports 36, 37 of the grill grid 13 is connected to an active cooling system. The active cooling system cools down the water coming from one twin water tank 25 through the outlet, female port 36, and feeds back the cooled water into the other twin water tank through the inlet, female port 37. This process results in a continuous circulation of cooled water inside the tubes 26. An additional advantage of the active cooling system is that it has a water storage, allowing replenishment of depleted water in the grill grid. Thus, there is no need of using an extra water battery. Moreover, to direct grease and food residues to spread more towards the center of the tubes 26, and fall centrically on the water tray, instead of splashing towards the twin water tanks 25, tubes 26 have symmetric downward slopes, forming a V-shape (see section view of FIG. 6).

Fig. 10 shows yet another alternative grill grid 13 with connections to an active cooling system. Fig. 11 shows a section view of the grill grid of Fig. 10 according to line XI-XI of Fig. 10. Instead of employing the twin tank grill grid with ports, active cooling can be achieved by using a meandering grill grid pipe. Fig. 10 describes a preferred construction of a meandering grill grid pipe for active cooling made from a frame 38 and a meandering pipe 39. Like the twin tank grill grid with ports, it also possesses inlet and outlet ports 37, 36 hooked up to an active cooling system. However, instead of straight tubes, it consists of just one seamless pipe 39 curving in a zigzag shape without interconnections to form a grill grid, with each terminal mounted to the outlet or inlet, female port 36, 37. Unlike the twin tank grill grid with ports, it does not need twin water tanks. Smokelessness and prevention of implosions inside the hollow pipe can be achieved in the same way as described for Fig. 5 and Fig. 9: both, by cooling down the grill grid and circulating the water therein by the active cooling system. In addition, to direct grease and food residues to spread more towards the center of the grill grid, and fall centrically on the water tray, instead of splashing towards the frame 38, the meandering pipe 39 has symmetric downward slopes, forming a V-shape (see section view of Fig. 11).

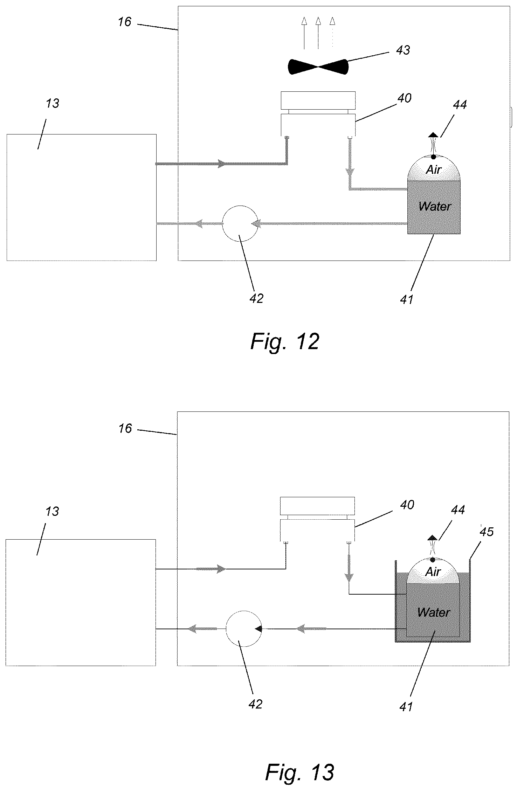

In the following, a detailed description of active cooling systems with hydraulic pump is given with reference to preferred examples shown in Figures 12 - 14.

Table 3 below summarizes configurations of active cooling system with hydraulic pump, and their recommended areas of employment.

**Table 3:**

| **Preferred Configuration of Active Cooling System With Hydraulic Pump** | **Drawing** | **Hydraulic Pump Type** | **Grill Grid Type** | **Radiator** | **Cooling Tub for Radiator** | **Fan** | **Cooling Tub for Water Storage** | **Mobility** | **Recommended for Gastronomic Facilities & Private Households** |
|---|---|---|---|---|---|---|---|---|---|
| With Fan | Fig. 12 | Hydraulic Pump (electric, Ram or other) | - Twin Tank Grill Grid With Ports | yes | no | yes | no | - indoors (for outdoors, see Tab. 4) | yes |
| | | | - Meandering Grill Pipe | | | | | | |
| Without Fan, with Cooling Tub for Water Storage | Fig. 13 | Hydraulic Pump (electric, Ram or other) | - Twin Tank Grill Grid With Ports | yes | no | no | yes | - indoors (for outdoors, see Tab. 4) | yes |
| | | | - Meandering Grill Pipe | | | | | | |
| Without Fan, with Cooling Tub for Radiator and for Water Storage | Fig. 14 | Hydraulic Pump (electric, Ram or other) | - Twin Tank Grill Grid With Ports | yes | yes | no | yes | - indoors (for outdoors, see Tab. 4) | yes |
| | | | - Meandering Grill Pipe | | | | | | |

Table 4 indicates hydraulic pump configurations, and their recommended areas of employment.

**Table 4:**

| **Preferred Hydraulic Pump Type** | **Drawing** | **External Energy** | **Mobility** | **Recommended for Private Households** | **Recommended** for **Gastronomic Facilities** |
|---|---|---|---|---|---|
| Electric Hydraulic Pump | Fig. 12, 13, 14 | Electricity | - indoors (outdoors, if electricity is available) | yes | yes |
| Hydraulic Ram Pump | Fig. 12, 13, 14 | none | - indoors | yes | yes |
| | | | - outdoors | | |
| Other Hydraulic Pump | Fig. 12, 13, 14 | Tbd. | - indoors (outdoors conditionally) | yes | yes |

Fig. 12 shows a first example of an active cooling system 16 with hydraulic pump and fan for a grill grid. Hot water coming from a grill grid 13 will be fed into the radiator 40, which cools down the water before feeding it into a water storage 41. The hydraulic pump 42 pumps cooled water from the bottom of the water storage 41 back into the grill grid 13 preventing it from smoking during the barbecue process. The fan 43 accelerates the cooling process by ventilating the heat from the radiator. The water storage 41 ensures bubble-free water supply to the grill grid 13 and serves as reservoir for replenishing of depleted water in the grill grid 13. Air bubbles in the water of the water storage 41 will rise to the upper part of it, and exhaust through the air escape valve 44. There are two preferred types of grill grid 13 appropriate for the active cooling system: twin tank grill grid with ports (Fig. 9), and meandering grill grid pipe (Fig. 10).

Fig. 13 outlines an active cooling system with hydraulic pump, without fan, and with cooling tub 45 for water storage 41. Instead of using a fan as featured in Fig. 12, the water storage 41 can be placed in a cooling tub for water storage 45. This also accelerates the cooling process of water before feeding it back to the grill grid 13.

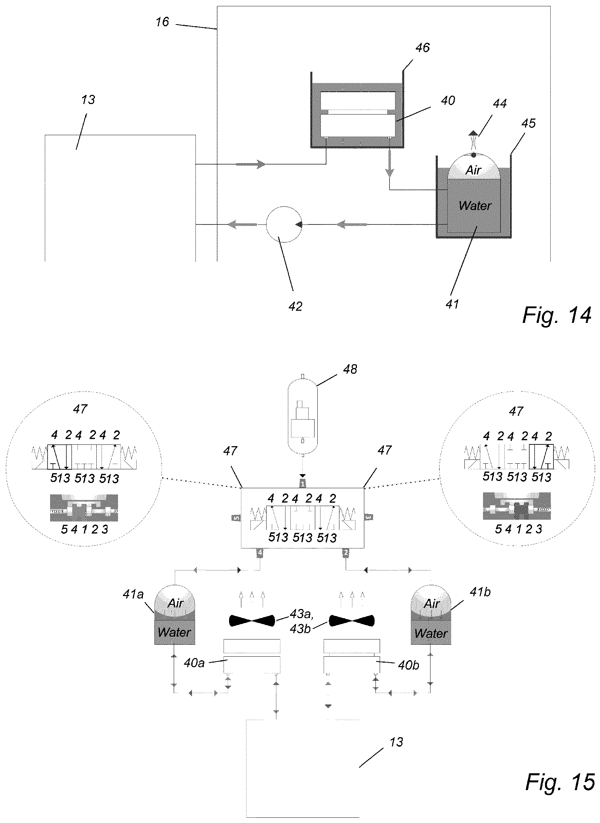

Fig. 14 outlines an active cooling system with hydraulic pump, without fan, and with cooling tub 45 for water storage and cooling tub 46 for radiator. The water storage 41 can be placed in a cooling tub for water storage 45, and the radiator 40 in the cooling tub for radiator 46. This intensifies the acceleration of the cooling process of water before feeding it back to the grill grid 13.

In the following, a detailed description of active cooling systems with air pressure is given in connection with examples shown in Figures 15 to 20.

Instead of using electrical energy or a hydraulic pump, air pressure is a natural driving force to circulate water through the active cooling system and the grill grid. The subsequent explanations elaborate the basic mechanism and several preferred configurations of this concept.

Table 5 summarizes various configurations of active cooling system with air pressure, and their recommended areas of employment.

**Table 5**

| **Preferred Configuration of Active Cooling System With Air Pressure** | **Drawing** | **Grill Grid Type** | **Radiator** | **Cooling Tub for Radiator** | **Fan** | **Cooling Tub for Water Container** | **Mobility** | **Recommended for Gastronomic Facilities & Private Households** |
|---|---|---|---|---|---|---|---|---|
| With Fan | Fig. 15 | - Twin Tank Grill Grid With Ports | yes | no | yes | no | - indoors | yes |
| | | - Meandering Grill Pipe | | | | | - outdoors | |
| Without Fan | Fig. 16 | - Twin Tank Grill Grid With Ports | yes | no | no | no | - indoors | yes |
| | | - Meandering Grill Pipe | | | | | - outdoors | |
| With Cooling Tub for Radiators only | Fig. 17 | - Twin Tank Grill Grid With Ports | no | yes | no | no | - indoors | yes |
| | | - Meandering Grill Pipe | | | | | - outdoors | |
| With Cooling Tub for Radiators and for Water Containers | Fig. 18 | - Twin Tank Grill Grid With Ports | no | yes | no | yes | - indoors | yes |
| | | - Meandering Grill Pipe | | | | | - outdoors | |
| With Cooling Tub for Water Containers only | Fig. 19 | - Twin Tank Grill Grid With Ports | no | no | no | yes | - indoors | yes |
| | | - Meandering Grill Pipe | | | | | - outdoors | |

Fig. 15 illustrates the basic function of an active cooling system with air pressure, with fan. At any given time, the water between the first water container 41a and the second one 41b flows in just one direction. Let's assume that the water flows from left water container 41a to right water container 41b, with left radiator 40a, grill grid 13, and right radiator 40b in between. In this stage, the spool valve 47 channels compressed air from the air compressor 48 to the left water container 41a, causing air overpressure in the upper part of the same. The air overpressure then drives water out of the left water container 41a. As soon as the water level in the right water container 41b reaches a predefined water threshold, the spool valve 47 will be activated to channel compressed air in the opposite direction, pressing the water in the right water container 41b through the right radiator 40b, through the grill grid 13, and then through the left radiator 40a back into the left water container 41a. Thereafter, once the water level in the left water container 41a reaches a predefined water threshold, the spool valve 47 will be activated again to change compressed air to flow in the opposite direction. This mechanism alternately circulate water in the active cooling system and in the grill grid 13, thereby cooling down the grill grid 13 to prevent it from smoking during the barbecue process. The fans 43a, 43b accelerate the cooling process of the radiators by ventilating heat away from the same.

The spool valve 47 operates in 3 different modes. First, in neutral (inactivated) mode, all ports of it are shut, and compressed air from the air compressor 48 is shut as well. Second, if the spool valve 47 is activated on the left side, the compressed air coming via port 1 from the air compressor 48 will be channeled to port 4 and will be fed into the left water container 41a, concurrently cutting off the compressed air supply for the right water container 41b. As a result, the water level in the right water container 41b continuously rises. Third, the right side of the spool valve 47 is activated as soon as the predefined water threshold in the right water container 41b is reached, and navigates compressed air from port 1 to port 2, feeding the right water container with compressed air, concurrently cutting off the compressed air supply for the left water container 41a, causing the water level in the same to rise. The spool valve 47 comes in two variants of activators: either electric or mechanical.

If the left water container 41a is supplied with compressed air through port 1 and port 4, water level inside the right water container 41b continuously rises, pressing out the air above water level of the same from port 2 to port 3. Vice versa, as long as the right water container 41b is supplied with compressed air through port 1 and port 2, the air above water level of the left water container 41a will be exhausted from port 4 to port 5.

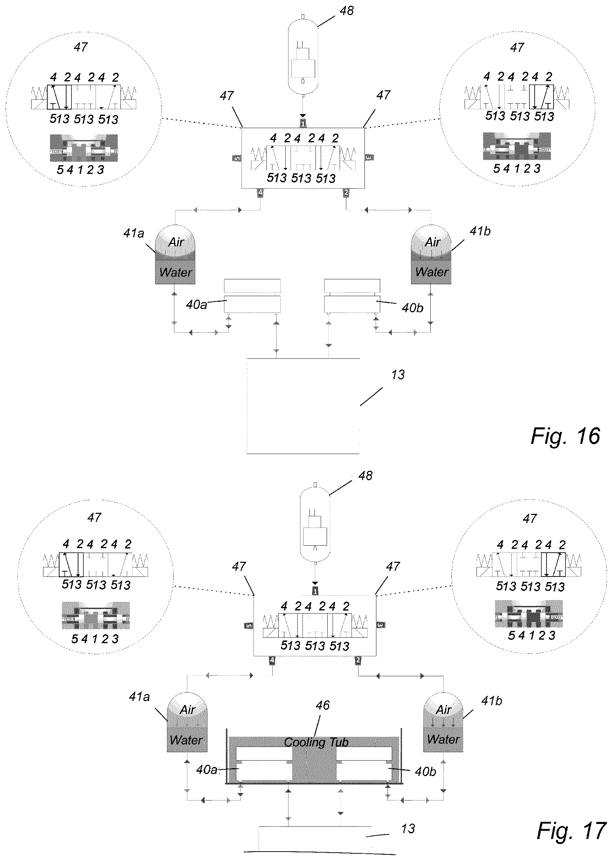

Fig. 16 illustrates an active cooling system with air pressure similar to Fig. 15, but without fan. Leaving out cooling fan is possible if the radiators are efficient enough to cool down the water for a proper grill process without smoke.

Fig. 17 outlines an active cooling system with air pressure like Fig. 16, but with a cooling tub 46 for the left and right radiator 40a, 40b. This is recommended if the radiators require additional cooling support to cool down the water for a proper grill process without smoke.

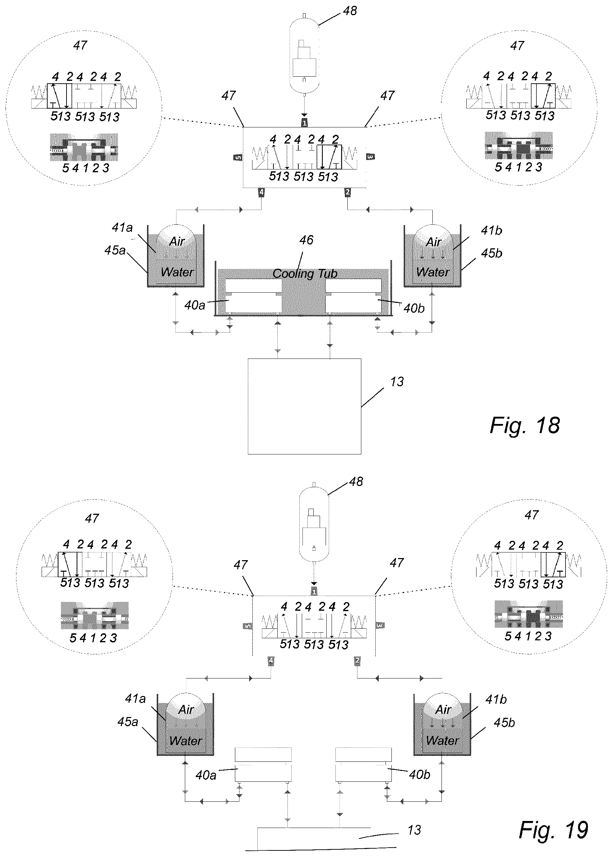

Fig. 18 depicts an active cooling system with air pressure similar to Fig. 17, but with both a cooling tub 46 for the left and right radiators 40a, 40b and a cooling tub 45a, 45b for each water container 41a, 41b. This is desirable if the radiators require even more cooling support to cool down the water for a proper grill process without smoke.

Fig. 19 shows an active cooling system with air pressure like Fig. 18, but with a cooling tub 45a, 45b for each water container 41a, 41b only, if this is sufficient to cool down the water for a proper grill process without smoke.

Fig. 20 describes an active cooling system with air pressure similar to Fig. 19, but without radiators, and with a cooling tub 45a, 45b for each water container 41a, 41b only, if this is sufficient to cool down the water for a proper grill process without smoke.

An embodiment of the smokeless barbecue system according to the present invention is described in connection with Figures 21 to 23. Elements which have already been described in connection with other embodiments above are denoted by the same reference signs. The barbecue system of this embodiment employs a self-sufficient cooling using a self-circulating gravity grill grid allowing active cooling.

As can be taken from Fig. 21, the grill grid 50 comprises a bottom water tank 51 and a top water tank 52 which are floated with water. Water tanks 51, 52 are interconnected by several first tubes 53 which have a positive slope, i.e. the first tubes rise from bottom water tank 51 to top water tank 52. In the embodiment depicted in Figures 21-23, the first tubes 53 have an essentially equal slope forming a slightly inclined support plane for food. Further, the bottom water tank 51 and the top water tank 52 are interconnected by two second tubes 54 which extend essentially horizontally, i.e. exhibit essentially zero slope. In the depicted embodiment, the first inclined tubes have a smaller inner diameter than the second horizontal tubes. Usually, this would also imply that the outer diameter of the first tubes 53 is smaller than the outer diameter of the second tubes so that, with respect to each other, the first tubes can be denoted "smaller tubes" and the second tubes can be denoted "bigger tubes".

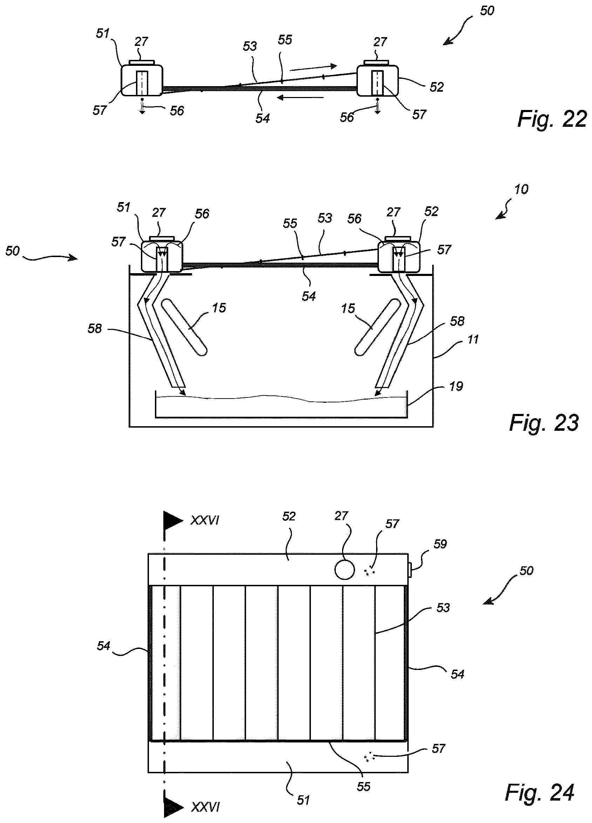

In use, grilled food is placed on the smaller first tubes 53 for barbecuing. Grease stoppers 55, which can be configured as rings surrounding the smaller first tubes 53 at certain intervals, prevent grease from falling downwards and spilling into grill burner 15 which are usually arranged on the side of the bottom water tank 51 and/or the top water tank 52 as indicated in Fig. 23. Accordingly, generation of smoke and possible damage of the grill burner over time by dripping grease is avoided.

During use, water inside the smaller first tubes 53 is heated up by the operation of the grill burners 15 resulting in a lower water density and thus becoming lighter than the water outside of the smaller first tubes 53. The water temperature within the bottom and top water tanks 51, 52 is cooler than the water temperature within the smaller first tubes 53. Accordingly, water within the smaller first tubes 53 will gain a higher buoyancy allowing water in the smaller first tubes 53 to flow against the force of gravity upwards into the top water tank 52 which, in turn, draws cooler water from the bottom water tank 51 into the smaller tubes 53 where it is recurrently heated up by the grill burners.

The heated water flow from the smaller first tubes 53 into the top water tank 52 causes the water level in the top water tank 52 to rise to a higher level than the water level in the bottom water tank 51. Due to the force of gravity, the water levels in both water tanks 51, 52 tends to be equalized by water circulating from the top water tank 52 to the bottom water tank 51 through the two bigger second tubes 54.

The continued process induces a self-circulation of water within the grill grid, whereby cooling down the smaller first tubes 53, thus preventing the burning of grill food and the corresponding generation of smoke. Accordingly, a smokeless barbecue system using a grill grid according to the embodiments of Figures 21-23 represents a self-driven cooled grill grid without requiring application of external forces or application of any external power sources. Self-sufficient cooling derives merely from establishing a self-circulation of water within the grill grid relying merely on the physical properties of water during heating and the application of the gravitational force acting on the system.

Upon heating of water in the smaller first tubes 53, steam 56 may be generated. As shown in Fig. 23, steam 56 is collected in the bottom and top water tanks 51, 52 above the respective water levels and can be discharged through steam tubes 57 and team ducting 58. Eventually, steam 56 condenses within the steam ducting and the resulting condensed water falls down into the water drain 19. The steam discharge has three essential physical effects: firstly, it will ease overpressure within the grill grid, secondly, it will help to further cool down the grill grid and thirdly, it will reduce the water volume circulating inside the grill grid. Therefore, after a certain operation time, the water inside the grill grid will get more and more depleted and its cooling functionality diminishes. Accordingly, the grill grid may be provided with a recharge opening (such as the caps 27 indicated in Fig. 21) allowing fresh water to be introduced into the grill. Handling of a hot grill grid for filling up water may, however, be associated with certain safety risks. Therefore, according to another option, the self-sufficient cooling grill grid is removably arranged within the barbecue system allowing it to be replaced by another grill grid filled with water. The proper timing for re-filling the grill grid or replacing the grill grid can easily be detected by the onset of smoke generation. More preferably however, to avoid any generation of smoke, the appliance can be provided with a timer which is set to indicate a typical operating time of the grill grid until water re-fill or grid replacement is required. In addition or alternatively, the bottom water tank can be provided with a water level indicator.

Since the self-circulating grill grid according to the present embodiment does not require any external power source, it represents the most ecofriendly version of the cooling systems described in the present application.

Figures 24 to 27 show another embodiment of the invention of a self-circulating grill grid allowing active cooling.

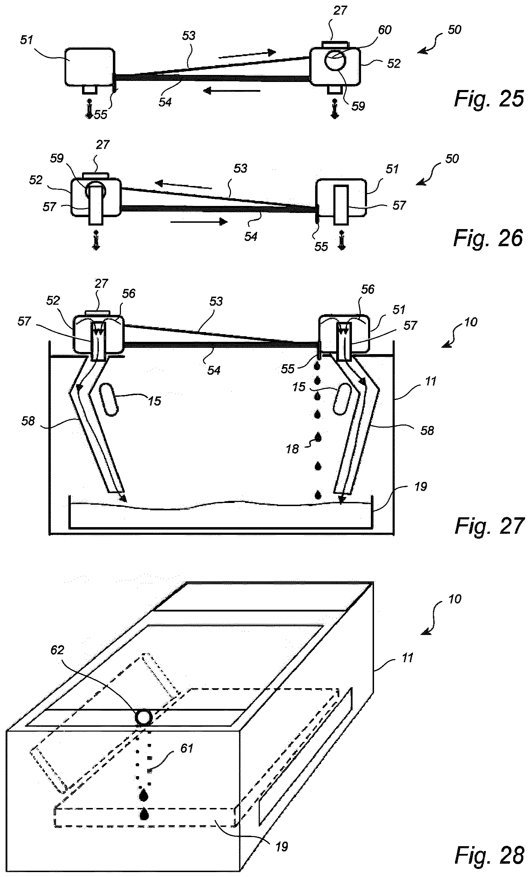

As can be taken from Fig. 24, the grill grid 50 comprises a bottom water tank 51 and a top water tank 52 which are floated with water. Water tanks 51, 52 are interconnected by several first tubes 53 which have a positive slope, i.e. the first tubes rise from bottom water tank 51 to top water tank 52. In the embodiment depicted in Figures 24-27, the first tubes 53 have an essentially equal slope forming a slightly inclined support plane for food. Further, the bottom water tank 51 and the top water tank 52 are interconnected by two second tubes 54 which extend essentially horizontally, i.e. exhibit essentially zero slope. In the depicted embodiment, the first inclined tubes have a smaller inner diameter than the second horizontal tubes. Usually, this would also imply that the outer diameter of the first tubes 53 is smaller than the outer diameter of the second tubes so that, with respect to each other, the first tubes can be denoted "smaller tubes" and the second tubes can be denoted "bigger tubes". In use, grilled food is placed on the smaller first tubes 53 for barbecuing. Grease stopper 55, which projects along the inner lower edge of the bottom water tank 51, prevents grease 18 from falling downwards and spilling into grill burner 15, which are usually arranged on the side of the bottom water tank 51 and/or the top water tank 52 as indicated in Fig. 27. Accordingly, generation of smoke and possible damage of the grill burner over time by dripping grease is avoided. During use, water inside the smaller first tubes 53 is heated up by the operation of the grill burners 15 resulting in a lower water density and thus becoming lighter than the water outside of the smaller first tubes 53. The water temperature within the bottom and top water tanks 51, 52 is cooler than the water temperature within the smaller first tubes 53. Accordingly, water within the smaller first tubes 53 will gain a higher buoyancy allowing water in the smaller first tubes 53 to flow against the force of gravity upwards into the top water tank 52 which, in turn, draws cooler water from the bottom water tank 51 into the smaller tubes 53 where it is recurrently heated up by the grill burners. The heated water flow from the smaller first tubes 53 into the top water tank 52 causes the water level in the top water tank 52 to rise to a higher level than the water level in the bottom water tank 51. Due to the force of gravity, the water levels in both water tanks 51, 52 tends to be equalized by water circulating from the top water tank 52 to the bottom water tank 51 through the two bigger second tubes 54. The continued process induces a self-circulation of water within the grill grid, whereby cooling down the smaller first tubes 53, thus preventing the burning of grill food and the corresponding generation of smoke. Accordingly, a smokeless barbecue system using a grill grid according to the embodiments of Figures 24-27 represents a self-driven cooled grill grid without requiring application of external forces or application of any external power sources. Self-sufficient cooling derives merely from establishing a self-circulation of water within the grill grid relying merely on the physical properties of water during heating and the application of the gravitational force acting on the system. Upon heating of water in the smaller first tubes 53, steam 56 may be generated. As shown in Fig. 27, steam 56 is collected in the bottom and top water tanks 51, 52 above the respective water levels and can be discharged through steam tubes 57 and team ducting 58. Eventually, steam 56 condenses within the steam ducting and the resulting condensed water falls down into the water tray 19. The steam discharge has three essential physical effects: firstly, it will ease overpressure within the grill grid; secondly, it will help to further cool down the grill grid; and thirdly, it will reduce the water volume circulating inside the grill grid. Therefore, after a certain operation time, the water inside the grill grid will get more and more depleted, and its cooling functionality diminishes. Accordingly, the grill grid may be provided with a recharge opening (such as the cap 27 indicated in Fig. 24) allowing fresh water to be introduced into the grill. Handling of a hot grill grid for filling up water may, however, be associated with certain safety risks.

Therefore, according to another option, the self-sufficient cooling grill grid is removably arranged within the barbecue system, allowing it to be replaced by another grill grid filled with water. The proper timing for re-filling the grill grid or replacing the grill grid can easily be detected by the onset of smoke generation. More preferably however, to avoid any generation of smoke, the appliance can be provided with a timer which is set to indicate a typical operating time of the grill grid until water re-fill or grid replacement is required. In addition, or alternatively, the top water tank can be provided with a visible water level indicator window 59 as indicated in Fig. 25. User can see the water level 60 within that window, and shall refill the grill grid, or replace the grill grid if the water level sinks below certain threshold. Since the self-circulating grill grid, according to the present embodiment, does not require any external power source, it represents the most ecofriendly version of the cooling systems described in the present application.

Fig. 28 shows a perspective view of still another embodiment of a smokeless barbecue system in accordance with the present invention having a refill system for the water tray in a similar view as the embodiment of Fig. 1.

The water within the water tray 19 is exposed to heat and depletes over the course of the barbecuing process. Fig. 28 illustrates a water tray refill tube 61, starting from the top surface of the grill, and terminates just above the water tray. Without interrupting the barbecue process, user can insert a funnel into the opening 62 of the refill tube 61, and pour water into the funnel for refill of the water tray 19

### List of reference signs

- 10: cooking appliance, barbecue system
- 11: casing
- 12: upper opening of casing
- 13: grill grid
- 14: heating assembly
- 15: heating elements, grill burners
- 16: cooling system
- 17: food
- 18: food residues, grease
- 19: water tray
- 20: opening for water tray
- 21: control board
- 22: pot holder
- 23: hot pot
- 24: frying pan
- 25: twin water tank
- 26: tubes
- 27: caps of twin water tanks
- 28: big tube
- 29: valves, holes in big tube
- 30: water battery
- 31: water battery with compressed air
- 32: connector
- 33: cap for water inlet/outlet
- 34: valve/hole
- 35: valve for charging with compressed air
- 36: outlet port
- 37: inlet port
- 38: frame
- 39: meandering pipe
- 40, 40a, 40b: radiator
- 41, 41a, 41b: water storage, water container
- 42: hydraulic pump
- 43, 43a, 43b: fan
- 44: air escape valve
- 45, 45a, 45b: cooling tub for water storage
- 46: cooling tub for radiator
- 47: spool valve
- 48: air compressor
- 50: self-circulating grill grid
- 51: bottom water tank
- 52: top water tank
- 53: smaller first tubes
- 54: bigger second tubes
- 55: grease stopper
- 56: steam
- 57: steam tube
- 58: steam ducting
- 59: water level indicator window
- 60: water level
- 61: water refill tube
- 62: opening of refill tube

## Claims

1. A cooking appliance (10) comprising
a casing (11) having an upper opening (12);
a grill grid (13,50) arranged in said upper opening (12) of said casing (11);
a heating assembly (14) comprising at least one heating element (15) arranged within said casing (11), said heating element (15) being connectable to an energy source; and
a cooling system (16,25,51,52) comprising a source of cooling fluid (25,30,31,41,41a,41b,51,52) for cooling said grill grid (13,50),
**characterized in that**
said grill grid (13,50) comprises a hollow tube assembly (26,28,39,53,54) connectable to said cooling system (16,25,51,52), said hollow tube assembly comprising essentially parallel hollow tubes (26,53) extending between a bottom water tank (25,51) arranged on one side said grill grid (13,50) and a top water tank (25,52) arranged on an opposite side of said grill grid (13,50), said essentially parallel hollow tubes being configured as first tubes (53) which rise from said bottom water tank (51) to said top water tank (52), and at least two second tubes (54) extend horizontally between said bottom water tank (51) and said top water tank (52).

2. The cooking appliance of claim 1, wherein said heating assembly comprises two heating elements (15) arranged laterally beneath said grill grid (13,50).

3. The cooking appliance of one of claims 1 or 2, wherein said heating elements (15) comprise electric heaters connectable to a re-chargeable battery housed within said casing (11) and/or to an external power grid, wherein said electric heaters preferably comprise fiber carbon heaters.

4. The cooking appliance of one of claims 1 or 2, wherein said heating elements (15) comprise gas heaters connectable to a gas supply, said gas supply being selected from a built-in gas cartridge removable housed within said casing (11), an external gas tank or to fixedly installed gas line.

5. The cooking appliance of one of claims 1 to 4, wherein said hollow tube assembly comprises a meandering hollow tube (39).

6. The cooking appliance of one of claims 1 to 5, wherein said source of cooling fluid comprises a water battery (30,31) or water storage (41,41a,41b) arranged in a cooling circuit, wherein said cooling circuit preferably comprises a radiator (40,40a,40b).

7. The cooking appliance of claim 6, wherein said water battery (31) or water storage (41,41a,41b) is pressurizable.

8. The cooking appliance of claim 6, wherein said cooling circuit comprises a feed pump (42) selected from electric pumps or hydraulic pumps, especially hydraulic RAM-pumps or hydraulic pumps operated by pressurized air.

9. The cooking appliance of one of claims 1 to 8, wherein said first tubes (53) have a smaller inner diameter than said second tubes (54).

10. The cooking appliance of one of claims 1 to 9, wherein said first tubes (53) comprise grease stoppers (55) at their outer circumference.

11. The cooking appliance of one of claims 1 to 10, wherein a grease stoppers (55) is arranged at a bottom edge of said bottom water tank (51).

12. The cooking appliance of one of claims 1 to 11, wherein said first and second tanks (51,52) comprise steam outlets (57,58), wherein said steam outlets preferably comprise steam tubes (57), said steam tubes being connected to downwardly extending steam ductings (58).

13. The cooking appliance of one of claims 1 to 12, further comprising a water tray (19) arranged beneath said grill grid (13,50) within said casing (11).

14. The cooking appliance of one of claims 1 to 13, wherein said grill grid (13,50) is removable.

15. A set comprising the cooking appliance of claim 14, a hot pot holder (22), and a pan tray (24), said grill grid (13,50), said hot pot holder (22) and said pan tray (24) being exchangeably arrangeable in said upper opening (12) of said casing (11).

## Patentansprüche

1. Kochgerät (10) mit
einem Gehäuse (11) mit einer oberen Öffnung (12);
einem Grillrost (13, 50), der in der oberen Öffnung (12) des Gehäuses (11) angeordnet ist;
einer Heizeinheit (14), die mindestens ein in dem Gehäuse (11) angeordnetes Heizelement (15) umfasst, wobei das Heizelement (15) an eine Energiequelle angeschlossen werden kann; und
einem Kühlsystem (16, 25, 51, 52) mit einer Kühlfluidquelle (25, 30, 31, 41, 41a, 41b, 51, 52) zum Kühlen des Grillrosts (13, 50),
**dadurch gekennzeichnet, dass**
der Grillrost (13, 50) eine Hohlrohranordnung (26, 28, 39, 53, 54) umfasst, die mit dem Kühlsystem (16, 25, 51, 52) verbunden werden kann, wobei die Hohlrohranordnung im Wesentlichen parallele Hohlrohre (26, 53) umfasst, die sich zwischen einem unteren Wassertank (25, 51), der auf einer Seite des Grillrosts (13, 50) angeordnet ist, und einem oberen Wassertank (25, 52), der auf einer gegenüberliegenden Seite des Grillrosts (13, 50) angeordnet ist, erstrecken, wobei die im Wesentlichen parallelen Hohlrohre als erste Rohre (53) ausgebildet sind, die von dem unteren Wassertank (51) zu dem oberen Wassertank (52) ansteigen, und mindestens zwei zweite Rohre (54) sich horizontal zwischen dem unteren Wassertank (51) und dem oberen Wassertank (52) erstrecken.

2. Kochgerät gemäß Anspruch 1, wobei die Heizeinheit zwei Heizelemente (15) umfasst, die seitlich unter dem Grillrost (13, 50) angeordnet sind.

3. Kochgerät gemäß einem der Ansprüche 1 oder 2, wobei die Heizelemente (15) elektrische Heizelemente umfassen, die an eine wiederaufladbare Batterie, die in dem Gehäuse (11) angeordnet ist, und/oder an ein externes Stromnetz angeschlossen werden können, wobei die elektrischen Heizelemente vorzugsweise Kohlefaser-Heizelemente umfassen.

4. Kochgerät gemäß einem der Ansprüche 1 oder 2, wobei die Heizelemente (15) Gasheizungen umfassen, die an eine Gasversorgung angeschlossen werden können, wobei die Gasversorgung ausgewählt ist aus einer eingebauten Gaskartusche, die in dem Gehäuse (11) angeordnet ist, einem externen Gastank oder einer fest installierten Gasleitung.

5. Kochgerät gemäß einem der Ansprüche 1 bis 4, wobei die Hohlrohranordnung ein mäanderförmiges Hohlrohr (39) umfasst.

6. Kochgerät gemäß einem der Ansprüche 1 bis 5, wobei die Kühlfluidquelle eine Wasserbatterie (30, 31) oder einen Wasserspeicher (41, 41a, 41b) umfasst, die in einem Kühlkreislauf angeordnet sind, wobei der Kühlkreislauf vorzugsweise einen Radiator (40, 40a, 40b) umfasst.

7. Kochgerät gemäß Anspruch 6, wobei die Wasserbatterie (31) oder der Wasserspeicher (41, 41a, 41b) unter Druck gesetzt werden kann.

8. Kochgerät gemäß Anspruch 6, wobei der Kühlkreislauf eine Förderpumpe (42) umfasst, die ausgewählt ist aus elektrischen Pumpen oder hydraulischen Pumpen, insbesondere hydraulischen RAM-Pumpen, oder druckluftbetriebenen hydraulischen Pumpen.

9. Kochgerät gemäß einem der Ansprüche 1 bis 8, wobei die ersten Rohre (53) einen kleineren Innendurchmesser haben als die zweiten Rohre (54).

10. Kochgerät gemäß einem der Ansprüche 1 bis 9, wobei die ersten Rohre (53) an ihrem Außenumfang Fettstopper (55) aufweisen.

11. Kochgerät gemäß einem der Ansprüche 1 bis 10, bei dem ein Fettstopper (55) an einem unteren Rand des unteren Wassertanks (51) angeordnet ist.

12. Kochgerät gemäß einem der Ansprüche 1 bis 11, wobei der erste und der zweite Tank (51, 52) Dampfauslässe (57, 58) aufweisen, wobei die Dampfauslässe vorzugsweise Dampfrohre (57) umfassen, wobei die Dampfrohre mit sich nach unten erstreckenden Dampfkanälen (58) verbunden sind.

13. Kochgerät gemäß einem der Ansprüche 1 bis 12, das ferner eine Wasserschale (19) umfasst, die unter dem Grillrost (13, 50) in dem Gehäuse (11) angeordnet ist.

14. Kochgerät gemäß einem der Ansprüche 1 bis 13, wobei der Grillrost (13, 50) abnehmbar ist.

15. Set, umfassend das Kochgerät nach Anspruch 14, einen Feuertopfhalter (22) und eine Pfannenschale (24), wobei der Grillrost (13, 50), der Feuertopfhalter (22) und die Pfannenschale (24) austauschbar in der oberen Öffnung (12) des Gehäuses (11) angeordnet werden können.

## Revendications

1. Appareil de cuisson (10), comprenant
un boîtier (11) présentant une ouverture supérieure (12) ;
une grille de gril (13, 50) agencée dans ladite ouverture supérieure (12) dudit boîtier (11) ;
un ensemble chauffant (14) comprenant au moins un élément chauffant (15) agencé à l'intérieur dudit boîtier (11), ledit élément chauffant (15) pouvant être raccordé à une source d'énergie ; et
un système de refroidissement (16, 25, 51, 52) comprenant une source de fluide de refroidissement (25, 30, 31, 41, 41a, 41b, 51, 52) pour refroidir ladite grille de gril (13, 50),
**caractérisé en ce que**
ladite grille de gril (13, 50) comprend un ensemble de tubes creux (26, 28, 39, 53, 54) pouvant être raccordé audit système de refroidissement (16, 25, 51, 52), ledit ensemble de tubes creux comprenant des tubes creux essentiellement parallèles (26,53) s'étendant entre un réservoir d'eau inférieur (25, 51) agencé sur un côté de ladite grille de gril (13, 50) et un réservoir d'eau supérieur (25, 52) agencé sur un côté opposé de ladite grille de gril (13, 50), lesdits tubes creux essentiellement parallèles étant configurés sous la forme de premiers tubes (53) qui s'élèvent dudit réservoir d'eau inférieur (51) audit réservoir d'eau supérieur (52), et d'au moins deux seconds tubes (54) qui s'étendent horizontalement entre ledit réservoir d'eau inférieur (51) et ledit réservoir d'eau supérieur (52).

2. Appareil de cuisson de la revendication 1, dans lequel ledit ensemble chauffant comprend deux éléments chauffants (15) agencés latéralement sous ladite grille de gril (13, 50).

3. Appareil de cuisson de l'une des revendications 1 ou 2, dans lequel lesdits éléments chauffants (15) comprennent des éléments chauffants électriques pouvant être raccordés à une batterie rechargeable logée dans ledit boîtier (11) et/ou à un réseau électrique externe, dans lequel lesdits éléments chauffants électriques comprennent de préférence des éléments chauffants à fibre de carbone.

4. Appareil de cuisson de l'une des revendications 1 ou 2, dans lequel lesdits éléments chauffants (15) comprennent des dispositifs de chauffage à gaz pouvant être raccordés à une alimentation en gaz, ladite alimentation en gaz étant choisie parmi une cartouche de gaz intégrée amovible logée à l'intérieur dudit boîtier (11), un réservoir de gaz externe ou une conduite de gaz installée de manière fixe.

5. Appareil de cuisson de l'une des revendications 1 à 4, dans lequel ledit ensemble de tubes creux comprend un tube creux en méandres (39).

6. Appareil de cuisson de l'une des revendications 1 à 5, dans lequel ladite source de fluide de refroidissement comprend une batterie d'eau (30, 31) ou un réservoir d'eau (41, 41a, 41b) agencé(e) dans un circuit de refroidissement, dans lequel ledit circuit de refroidissement comprend de préférence un radiateur (40, 40a, 40b).

7. Appareil de cuisson de la revendication 6, dans lequel ladite batterie d'eau (31) ou ledit réservoir d'eau (41, 41a, 41b) peut être mis sous pression.

8. Appareil de cuisson de la revendication 6, dans lequel ledit circuit de refroidissement comprend une pompe d'alimentation (42) choisie parmi des pompes électriques ou des pompes hydrauliques, en particulier des pompes hydrauliques à piston plongeur ou des pompes hydrauliques actionnées par de l'air sous pression.

9. Appareil de cuisson de l'une des revendications 1 à 8, dans lequel lesdits premiers tubes (53) présentent un diamètre intérieur plus petit que lesdits seconds tubes (54).

10. Appareil de cuisson de l'une des revendications 1 à 9, dans lequel lesdits premiers tubes (53) comprennent des intercepteurs de graisse (55) au niveau de leur circonférence extérieure.

11. Appareil de cuisson de l'une des revendications 1 à 10, dans lequel un interrupteur de graisse (55) est agencé au niveau d'un bord inférieur dudit réservoir d'eau inférieur (51).

12. Appareil de cuisson de l'une des revendications 1 à 11, dans lequel lesdits premier et second réservoirs (51, 52) comprennent des sorties de vapeur (57, 58), dans lequel lesdites sorties de vapeur comprennent de préférence des tubes de vapeur (57), lesdits tubes de vapeur étant raccordés à des conduits de vapeur s'étendant vers le bas (58).

13. Appareil de cuisson de l'une des revendications 1 à 12, comprenant en outre un bac à eau (19) agencé sous ladite grille de gril (13, 50) à l'intérieur dudit boîtier (11).

14. Appareil de cuisson de l'une des revendications 1 à 13, dans lequel ladite grille de gril (13, 50) est amovible.

15. Ensemble comprenant l'appareil de cuisson de la revendication 14, un support de casserole (22) et un plateau à mijoter (24), ladite grille de gril (13, 50), ledit support de casserole (22) et ledit plateau à mijoter (24) pouvant être agencés de manière interchangeable dans ladite ouverture supérieure (12) dudit boîtier (11).
